# EUROPEAN PATENT APPLICATION

(11) **EP 1 115 046 A2**
(43) Date of publication of application: **11.07.2001**
(21) Application number: 00311433.7
(22) Date of filing: 20.12.2000
(51) Int. Cl.: G05B 19/042

(54) **Configurable electronic controller for appliances**

(30) Priority: 07.01.2000 IN MU002000
(71) Applicant: Vasu Tech Limited, New Delhi 110065 (IN)
(72) Inventor: Bhatnagar, Rajiv, Mumbai 400 052, Maharashtra (IN)
(74) Representative: Robson, Aidan John

(57) **Abstract**

This invention relates to a Configurable Electronic Controller for Appliances comprising a configurable Central Control Unit, connected to an Input Interface Unit, a User Interface Unit, a Load Interface Unit, a Supply Interface Unit, a Non-Volatile Memory containing configuration data and other data, a Reset Circuit, and a Clock Generator, for providing a solution that is flexible and low-cost.

## Description

This invention relates to a configurable electronic controller for appliances designed to control the function of appliances such as Refrigerators, Washing Machines, Dryers, Dish-Washers, Air-Conditioners, and the like. The controller is configurable in a variety of ways to provide flexibility and optimization of control in the intended application, at low cost.

### Background Art

Electrical controls used in appliances are required to be low-cost as appliances are largely targeted at the cost-sensitive, high-volume consumer market. As a result of this requirement, the controls used in many appliances are still of the non-electronic, electro-mechanical variety. Examples of such controls are Bimetallic or liquid capillary thermostats, clockwork timers, and mechanical switches and relays. These controls are inherently limited in reliability because they involve moving mechanical parts that are prone to wear and tear. In addition, repeated thermal expansion and contraction causes thermal stress wearout. However, their low-cost has retained their use for the past several years inspite of advances in electronics technology.

Solid-state controls including electronic controls have made in-roads in some applications - such as in controls for washing machines. These controls are typically designed around a microcontroller, which is programmed to perform the desired control actions. As the real-world environment of the application typically involves the processing of a significant number of signals and devices (e.g. sensors, switches, motors, etc.) some of which are analog in nature, a significant amount of circuitry is required in addition to the microcontroller -- such as latches, decoders, drivers, multiplexers, analog-to-digital converters, digital-to-analog converters, etc. Alternatively, a more expensive microcontroller that incorporates the necessary capability, may be used. In either case, it results in increased cost. Consequently, inspite of improved reliability and reduced service support costs, there is no significant benefit in the direct cost of the bill of material. As a result, the application does not realize the full benefits of an electronic solution. US Patents 4158759, 4367387, 4399352, 4406945, 4431893, 4481393, 4504716, 4533810, 4367387, and 4504716 are examples of such electronic controls for various appliances.

Some reconfigurable electronic controllers are also known. US Patents 5306995, 5412291, 5619614, and 5647231 describe some reconfigurable electronic controllers. However, the inventions covered by these patents are limited to only washing machines and dryers, and are at the same time relatively expensive to implement as they make use of fairly computation-intensive algorithms utilizing fuzzy-logic implementations on microprocessor-based hardware. The limitations cited above in the case of microprocessor-based implementations are also applicable to these inventions.

### The object and summary of the invention

The object of this invention is to provide a single, compact configurable electronic control unit using a universal ASIC (Application Specific Integrated Circuit) control device, that overcomes all the above-mentioned drawbacks, providing the advantages of electronic control, at low cost by providing a solution that is effective both in terms of improving reliability to the desired level as well in providing significant benefits in the direct cost of material and manufacture. This is achieved by the use of a universal controller based on an ASIC that combines the functionality of various different appliances and can be configured to provide the desired set of features when used in a specific appliance. The ASIC integrates all the required control circuitry and thereby significantly reduces the cost of the Bill of Material.

To achieve the said objective this invention provides a configurable electronic appliance controller comprising:
- a Non-Volatile Memory containing configuration data,
- a configurable Central Control Unit which performs the basic processing and control of the functioning of the appliance, and is configured for the required functionality by the configuration data supplied by the said Non-Volatile Memory,
- one set of inputs of the said Central Control Unit are connected to the outputs of an Input Interface Unit which receives the signals from various sensing elements in the appliance and conditions these signals for further processing by the said Central Control Unit,
- one set of outputs of the said Central Control Unit is fed back to the said Input Interface Unit for controlling its internal operation,
- a second set of inputs of the said Central Control Unit receive user input data from the outputs of a User Interface Unit,
- a second set of outputs of the said Central Control Unit are fed back to the said User Interface Unit as signals for outputting data to the user by visual and audible means, as well as for controlling its internal operation,
- a third input of the said Central Control Unit is connected to one output of a Load Interface Unit to provide data on load conditions,
- a third set of outputs from the said Central Control Unit are connected to the inputs of the said Load Interface Unit which drives the actuating means in the appliance for controlling its operation,
- a fourth input of the said Central Control Unit receives power supply condition signals from a Supply Interface Unit,
- the said Non-Volatile Memory Unit provides non-volatile storage of data and is connected to main circuit blocks consisting of the said Central Control Unit, Input Interface Unit, User Interface Unit, Load Interface Unit, and Supply Interface Unit,
- the output of a Clock Generator circuit is connected to one input of each of the said main circuit blocks and produces a clock signal required for their operation,
- the output of a Reset circuit is connected to one input of each of the said main circuit blocks and produces a reset signal required for their proper initialization,
- The arrangement between the components of the main circuit blocks is such that the said Central Control Unit receives sensed parameter data supplied by the various sensing devices in the appliance, from the said Input Interface Unit, user requirement data from the said User Interface Unit, load conditions data from the said Load Interface Unit, and the supply conditions data from the said Supply Interface Unit, and processes all this data in accordance with its configured functionality, and then applies signals to the inputs of the said Load Interface Unit for operating the actuating devices in the appliance for controlling its operation, and to the inputs of the said User Interface Unit for providing feedback to the user.

The said Central Control Unit consists of:
- a Configurable Logic Circuit for implementing the basic control algorithms that determine the functioning of the appliance, which is configured for the required functionality by the configuration data supplied by the said Non-Volatile Memory
- one set of inputs of the said Configurable Logic Circuit are connected to the outputs of he said Input Interface Unit for receiving the signals from various sensing elements in the appliance,
- one set of outputs of the said Configurable Logic Circuit is connected to the input of the said Input Interface Unit for controlling its internal operation,
- a second set of inputs of the said Configurable Logic Circuit is connected to one output of the said User Interface Unit for receiving user supplied data,
- a second set of outputs of the said Configurable Logic Circuit is connected to the input of the said User Interface Unit for supplying feedback to the user as well as for controlling the internal operation of the said User Interface Unit,
- a third input of the said Configurable Logic Circuit is connected to one output of the said Load Interface Unit for receiving data about the load conditions,
- a third set of outputs of the said Configurable Logic Circuit is connected to one input of the said Load Interface Unit for controlling the load as well as for controlling the internal operation of the said Load Interface Unit,
- a fourth input of the said Configurable Logic Circuit is connected to one output of the said Supply Interface for receiving data on the supply conditions,
- a fifth input of the said Configurable Logic Circuit is connected to a Counters and timers block which contains an array of counters and timers required for the operation of the appliance,
- a sixth input of the said Configurable Logic Circuit is connected to a memory circuit for reading of data stored therein,
- a fifth output of the said Configurable Logic Circuit is connected to the said memory circuit for writing data into it,
- a seventh input of the said Configurable Logic Circuit is connected to the output of a Sequence Control circuit which provides the control signals required for defining the sequence of operations performed by the said Configurable Logic Circuit,
- an eighth input of the said Configurable Logic Circuit is connected to a Real-Time-Clock (RTC) circuit which provides time-of-day information required for the functioning of the Configurable Logic Circuit,
   a sixth output of the said Configurable Logic Circuit is connected to the input of the said RTC circuit for setting its value when required.
   the arrangement between the said Configurable Logic Circuit, Sequence Control circuit, Counters and Timers block, Memory block, and RTC circuit is such that the sensor data received from the said Input Interface Unit, user requirement data received from the said User Interface Unit, load conditions data supplied by the said Load Interface Unit, and supply conditions data furnished by the said Supply Interface Unit, are processed by the said Configurable Logic Circuit under the control of signals from the said Sequence Control circuit, using data supplied by the said Memory block, said Counters and Timers block and said RTC circuit, to generate the outputs required to control the loads through the said Load Interface Unit, provide feedback data required for the user through the said User Interface Unit, as well as supply signals required to update the data stored in the said Memory block, said Counters and Timers block and said RTC circuit, for use in subsequent processing.

The said Input Interface Unit consists of:
- Sensor Drive circuits for providing bias signals to external sensing devices connected to the Electronic Appliance Controller,
- the output of each of the said Sensor Drive circuit is connected to the input of one channel of an Analog Multiplexer,
- the output of the said Analog Multiplexer is connected to the input of an Analog-to-Digital Converter,
- the said Analog-to-Digital Converter contains in-built circuitry for the correction for the sensitivity and offset of the signal from each sensing device,
- the output of the said Analog-to-Digital converter is connected to one input of a Digital Comparator,
- the other input of the said Digital Comparator is connected to the said Central Control Unit for receiving a reference signal,
- the output of the said Digital Comparator is connected to one input of a Digital Multiplexer,
- the other inputs of the said Digital Multiplexer receive digital signals from various sensing devices in the appliance,
- the output of the said Digital Multiplexer is connected to the input of a Noise Filter,
- the output of the said Noise Filter is connected to an input of the said Central Control Unit for furnishing data on the signals received from the various sensing devices,
- a Digital Demultiplexer receives input signals from the said Central Control unit and produces multiple digital output signals for scanning the status of various digital sensing devices in the appliance,
- the arrangement between the said Analog Multiplexer, said Analog-to-Digital Converter, said Digital Comparator, said Digital Multiplexer, and said Noise Filter is such that the sensor data received from analog sensors is selected by the said Analog Multiplexer Circuit under the control of signals from the said Central Control Unit, converted to digital form by the said Analog-to-Digital converter and applied to the inputs of the said Digital Multiplexer which also receives other digital signals directly from digital sensing devices in the appliance which are scanned by signals supplied by the said Digital Demultiplexer using signals supplied by the said Central Control Unit, and then applies these one-at-a-time under control of signals from the said Central Control Unit, to the input of the said Noise Filter for filtering and supplying to the said Central Control Unit for processing.

The said User Interface Unit consists of:
- Sensor Drive circuits for providing bias signals to various analog components, such as potentiometers, used for obtaining user selection values,
- the output of each of the said Sensor Drive circuits is connected to the input of one channel of an Analog Multiplexer,
- the output of the said Analog Multiplexer is connected to the input of an Analog-to-Digital Converter,
- the said Analog-to-Digital Converter contains circuitry for providing in-built correction for the sensitivity and offset of the signal from each sensing device,
- the output of the said Analog-to-Digital converter is connected to one input of a Digital Comparator,
- the other input of the said Digital Comparator is a reference signal received by the User Interface Unit from the Central Control Unit,
- the output of the said Digital Comparator is connected to one input of a Digital Multiplexer,
- the other inputs of the said Digital Multiplexer receive digital signals from various front-panel switches provided for receiving user input,
- the output of the said Digital Multiplexer is connected to the input of a Noise Filter,
- the output of the said Noise Filter is connected to an input of the said Central Control Unit,
- a Digital Demultiplexer receives input signals from the said Central Control unit and produces multiple digital output signals for scanning the status of the various digital inputs, such as switches, for obtaining user input,
- a second set of signals from the said Central Control Unit are connected to a set of Latches,
- the output of each of the said Latches is connected to the input of a Display and Audio Driver circuit which contains the circuitry for driving the display device and audio output device for providing output data to the user,
- the arrangement between the said Analog Multiplexer, said Analog-to-Digital Converter, said Digital Comparator, said Digital Multiplexer, said Noise Filter, said Digital Demultiplexer, and said Display and Audio Driver circuits is such that the sensor data received from the analog sensors in the User Interface is selected by the said Analog Multiplexer Circuit under the contiol of signals from the said Central Control Unit, converted to digital form by the said Analog-to-Digital converter and applied to the inputs of the said Digital Multiplexer which also receives other digital signals received directly from digital sensing devices in the User Interface which are scanned by signals supplied by the said Digital Demultiplexer using signals from the Central Control Unit, and selectively applies them to the said Noise Filter under control of the said Central Control Unit, for filtering and supplying to the said Central Control Unit for processing, while simultaneously the said Display and Audio Driver circuit drives the external display and audio output devices in accordance with the data supplied by the said Central Control Unit.

The said Load Interface Unit consists of:
- a plurality of Latches for storing the data received from the said Central Control Unit,
- the output of each of the said Latches is connected to the input of a Switch Control circuit,
- the output of each of the said Switch Control circuits drives a Switch that operates a Load which is an actuating device in the appliance used to control its operation,
- one end of each of the said Switches is connected to the Load while the other end of the Switch is connected to a Current Sensor for sensing the current through the load,
- the output from each of the said Current Sensors is connected to one input of an Analog Multiplexer,
- the output of the said Analog Multiplexer is connected to the input of a Load Sense Circuit which incorporates in-built correction for the sensitivity and offset of the signal from each Shunt,
- the output of the said Load Sense Circuit is connected to one input of a Digital Comparator,
- the other input of the said Digital Comparator is a reference signal received by the said Load Interface Unit from the Central Control Unit,
- the output of the said Digital Comparator is connected to an input of the said Central Control Unit,
- the arrangement between the said Latches, said Switch Drive Circuits, said Switches, said Current Sensors, said Analog Multiplexer, said Load Current Sensing Circuit, said Digital Comparator and said output Latch, is such that the load current data received by the said Load Current Sensors is converted to digital form by the said Load Current Sense Circuit, compared with reference data supplied from the said Central Control Unit by the said Digital Comparator and supplied to the said Central Control Unit which furnishes signals for controlling the operation of the said Switch Drive Circuits through the said Latches.

The said Supply Interface Unit consists of:
- a Supply Voltage Sense circuit which senses the voltage level of the input supply voltage,
- the output of the said Supply Voltage Sense circuit is connected to one input of each of two digital comparators,
- the second input of each of the said Digital Comparators is connected to a signal received from the said Central Control Unit,
- the outputs of the said Digital Comparators are connected to the input of a Latch,
- the output of the said Latch is connected to an input of the said Central Control Unit,
- the arrangement between the said Supply Voltage Sense circuit, said Digital Comparators, and said Latch is such that the sensed supply voltage is converted to digital form by the said Supply Voltage Sense circuit and compared by the said Digital Comparators with reference data supplied by the said Non-Volatile Memory, and the results of the comparison are latched by the said Latch and furnished to the said Central Control Unit as supply condition data.

The said Configurable Electronic Controller for Appliances further includes a Network Interface Unit that is connected to another output from the said Central Control Unit and provides an input to the said Central Control Unit for exchanging data between an external network and the said Central Control Unit.

The said Configurable Logic Unit in one implementation is a Gate Array that is configured by the configuration data supplied by the said Non-Volatile Memory.

The said Configurable Logic Unit in another implementation is an embedded microprogrammed controller that is configured by the configuration data supplied by the said Non-Volatile Memory.

The said Configurable Logic Unit in another implementation is configurable for providing overcurrent protection and "Soft Start" facility that supplies a reduced voltage start to the load in order to minimize in-rush current stress at turn-on, selectively to the loads through the signals applied to the inputs of the said Load Interface Unit.

The said Configurable Logic Unit in another implementation is configurable for providing overheat protection selectively to the loads using temperature data supplied by sensing devices physically attached to the selected loads through the signals supplied by the said Input Interface Unit, and applying signals to the inputs of the said Load Interface Unit to turn-off the drive to the loads in case of overheat conditions.

The said Clock Generator is an oscillator with a frequency preferably in the range 32 KHz to 25 MHz.

The invention will now be described with reference to the accompanying drawings and examples:
Fig ― 1 shows the top-level block diagram of the configurable electronic controller for appliances, according to this invention,
Fig ― 2 shows the top-level block diagram of the configurable electronic controller for appliances, which includes a Network Interface,
Fig ― 3 shows the internal block diagram of the Central Control Unit,
Fig ― 4 shows the internal block diagram of the Input Interface Unit,
Fig ― 5 shows the internal block diagram of the User Interface Unit,
Fig ― 6 shows the internal block diagram of the Load Interface Unit,
Fig ― 7 shows the internal block diagram of the Supply Interface Unit,
Fig ― 8 shows the internal block diagram of the Network Interface Unit,
Fig ― 9 shows an application of the Electronic Appliance Controller in a Washing Machine,
Fig ― 10 shows the application of the Electronic Appliance Controller in a Refrigerator.

Referring to Fig.- 1, inputs (1a) to (1n) from sensing devices such as transducers and switches located at various points in the appliance are received at the input of the Input Interface Unit (3) which also provides the drive for these sensing devices. The Input Interface Unit (3) converts these signals into a digital form suitable for processing by the Central Control Unit (6). The Central Control Unit (6) controls the internal operation of the Input Interface Unit (3) by means of control signals (5a-5f) and receives the outputs generated by it (4a-4b). In addition, the Central Control Unit (6) also receives user input data (8a-8f) from the User Interface Unit (7). The Load Interface Unit (12) monitors the load conditions at various actuating devices in the appliance and provides signal (14) on the status of these devices to the Central Control Unit (6). In addition, the Supply Interface Unit (16) provides data on supply conditions (17) to the Central Control Unit (6). The Central Control Unit (6) processes all these inputs and generates outputs in terms of information that is required to be presented to the user (9a-9d) by visual or audible means through the User Interface Unit (7), as well as signals for operating the various loads and actuating devices in the appliance used for controlling its operation (15a-15p) to the Load Interface Unit (12). The Non-Volatile Memory (19) provides non-volatile storage of data required by the main circuit blocks comprising the Central Control Unit (6), Input Interface Unit (3), User Interface Unit(7), Load Interface Unit (12) and Supply Interface Unit (16). The Reset circuit (18) generates a Reset signal (R) required for the proper initialization of the main circuit blocks, especially when power is initially applied to the system. The Clock Generator (20) generates a clock signal (C) required by the main circuit blocks for their internal operation.

Referring to Fig.- 2 which shows the block diagram of the Configurable Electronic Appliance Controller incorporating a Network Interface, inputs (1a) to (1n) from sensing devices such as transducers and switches located at various points in the appliance are received at the input of the Input Interface Unit (3) which also provides the drive for these sensing devices The Input Interface Unit (3) converts these signals into a digital form suitable for processing by the Central Control Unit (6). The Central Control Unit (6) controls the internal operation of the Input Interface Unit (3) by means of control signals (5a-5f) and receives the outputs generated by it (4a-4b). In addition, the Central Control Unit (6) also receives user input data (8a-8b) from the User Interface Unit (7). The Load Interface Unit (12) monitors the load conditions at various actuating devices in the appliance and provides signal (14) on the status of these devices to the Central Control Unit (6). In addition, the Supply Interface Unit (16) and the Network Interface Unit (21) provide data on supply conditions (17) and the data/commands received from devices (23) in the external network, to the Central Control Unit (6). The Central Control Unit (6) processes all these inputs and generates outputs in terms of information that is required to be presented to the user (9a-9d) by visual or audible means through the User Interface Unit (7), signals for operating the various loads and actuating devices in the appliance used for controlling its operation (15a-15f) to the Load Interface Unit (12), and data required to be communicated to external devices (22) to the Network Interface Unit (21 ). The Non-Volatile Memory (19) provides non-volatile storage of data required by the main circuit blocks comprising the Central Control Unit (6), Input Interface Unit (3), User Interface Unit(7), Load Interface Unit (12), Network Interface Unit (21) and Supply Interface Unit (16) to control functionality of the appliance. The Reset unit (18) generates a Reset signal (R) required for the proper initialization of the main circuit blocks, especially when power is initially applied to the system. The Clock Generator (20) generates a clock signal (C) required by the main circuit blocks for their internal operation.

Fig. ― 3 shows the internal block diagram of the Central Control Unit. Configurable Logic Circuit (25) of the Central Control Unit (6) receives signals (4a-4b) from the Input Interface Unit (3) and generates outputs (5a-5d) for the control of the Input Interface Unit (3). It also receives signals (8a-8b) from the User Interface Unit (7) and sends signals (9a-9d) to control it. Similarly, the Configurable Logic Circuit (25) receives signals (15a-15h) from the Load Interface Unit (12) and sends signal 14 to it. Finally, it receives signal (17) from the Supply Interface Unit (16). Counters and Timers block (26) is connected to an input of the Configurable Logic Circuit (25) and provides a collection of counters and timers for use by it. Sequence Control circuit (31) provides timing and sequence control signals required for the proper operation of the Configurable Logic Circuit (25), while Memory (28) provides a facility for storing data required for its functioning and the Real Time Clock RTC (33) provides time-of-day information. The Configurable Logic Circuit (25) also receives signals (M, R, and C) from the Non-Volatile Memory (19), the Reset circuit (18) and the Clock Generator (20) respectively. The Counters and Timers block (26) and Sequence Control circuit (31) also receive signals from the Non-Volatile Memory (M), the Reset circuit (R) and the Clock Generator (C) required for their internal operation.

Fig. - 4 shows the internal structure of the User Interface Unit. Sensor Drive circuits (36a-36h) provide bias signals for external sensing devices mounted in the appliance. The signal received from each sensing device is connected to one input of Analog Multiplexer (37) the output of which is connected to the input of Analog-to-Digital converter (38) which also contains additional circuitry for correcting for the offset and sensitivity of the signal received from the external sensing device. Analog Multiplexer (37) also receives selection control signals (5a) from the Central Control Unit (6) while the Analog-to-Digital converter (38) receives the data for the sensitivity and offset correction from the Non-Volatile Memory (M). The output of the Analog-to-Digital converter (38) is connected to one input of Digital Comparator (39) the other input of which receives reference data from the Central Control Unit (6). The output of the Digital Comparator (39) is connected to one input of Digital Multiplexer (40) which also receives digital input signals generated by external sensing devices in the appliance. The output of the Digital Multiplexer (40) is connected to the input of Noise Filter (41) which generates a filtered output for an input of the Central Control Unit (6). Additionally, signals (5e) and (5f) from the Central Control Unit (6) connect to the input and selection terminal respectively of Digital Demultiplexer (42) which generates signals (2a-2f) used for driving various digital sensing devices in the appliance.

Fig. ― 5 shows the internal structure of the User Interface Unit. Sensor Drive circuits (43a-43h) provide bias signals for analog variable means, such as potentiometers, on the operating panel of the Electronic Appliance Controller. The signal received from each variable means is connected to one input of Analog Multiplexer (44) the output of which is connected to the input Analog-to-Digital converter (45) which also contains additional circuitry for correcting for the offset and sensitivity of the signal received from the analog variable means. Analog Multiplexer (44) also receives selection control signals (8a) from the Central Control Unit (6) while Analog-to-Digital converter (45) receives the data for the sensitivity and offset correction from the Non-Volatile Memory (M). The output of the Analog-to-Digital converter (45) is connected to one input of Digital Comparator (46) the other input of which receives reference data from the Central Control Unit (6). The output of the Digital Comparator (46) is connected to one input of Digital Multiplexer (47) which also receives digital input signals generated by switches in the operating panel of the Electronic Appliance Controller. The output of the Digital Multiplexer (47) is connected to the input of Noise Filter (48) which generates a filtered output for outputting to an input of the Central Control Unit (6). Additionally, signals (7c) and (8f) from the Central Control Unit (6) connect to the inputs of Digital Demultiplexer (49) which generates signals (11a-11h) used for driving the switches in the operating panel of the Electronic Appliance Controller. Display Drive Circuit (50) receives input signals (7d-7k) and signal (8f) from the Central Control Unit (6) through Latches (51a-51f) and generates outputs (11i-11n) to drive the display device located in the operating panel of the Electronic Appliance Controller.

Fig. ― 6 shows the internal structure of the Load Interface Unit. Latches (52a-52f) receive input control signals (15a-15f) from the Central Control Unit (6) and connect to Switching Control circuits (53a-53f) which drive Switches (54a-54f). The Switching Control circuits (53a-53f) also receive control signals (15g-15n) from the Central Control Unit (6). The output of each Switch (54a-54f) connects to an external load which is an actuating device that controls the operation of the appliance. In addition, Current Sense devices (55a-55f), one in series with each Switch monitor the current drawn by each load. The signals (57a-57f) from each Current Sense device are received at the inputs of a multichannel Analog Multiplexer (58) which multiplexes these signals to its output under the control of selection signals (150) from the Central Control Unit (6). The output of the Analog Multiplexer (58) is connected to the input of Load Current Sense (59) circuit which also has in-built circuitry for correcting for the offset and sensitivity of the signal, using correction data supplied by Non-Volatile Memory (M) under the control of the Central Control Unit (6).The output of the Load Current Sense circuit (59) is connected to the input of Digital Comparator (60) which also receives a reference signal (15p) from the Central Control Unit (6) at its other input. The output (14g) of the Digital Comparator (60) is connected to an input of the Central Control Unit (6).

Fig.-7 shows the internal structure of the Supply Interface Unit. Supply Voltage Sense circuit (61) monitors the voltage of the supply (65) to the Electronic Appliance Controller and provides a corresponding digital value at its output. The output of the Supply Voltage Sense circuit (61) is connected to one input of each of the digital comparators (62) and (63). The outputs of these Digital Comparators control a Latch (64) which provides a signal to an input of the Central Control Unit (6).

Fig.-8 shows the internal structure of the Network Interface Unit. Network Interface Circuit (66) connects to the signal lines from the external network, provides compatible electrical signal levels and timings and a bi-directional transfer of signals between the network and the Configurable Electronic Appliance Controller. The signals received from the network are output to a Network Protocol Decoder (67) which extracts the useful information from the received signal and presents to the Central Control Unit (6). The signals from the Central Control Unit (6) are received by Network Protocol Encoder (68) which adds-on protocol defined information and feeds it to the Network Interface Circuit (66) for transmission to the external network.

Fig.-9 shows the application of the Configurable Electronic Appliance Controller (66) in a Washing Machine (67). Signals from a Water Level Sensor (68), Water Temperature Sensor (70) and a Cover-Open switch (69) are received at the inputs of the Configurable Electronic Appliance Controller (66). The user provides selection data, such as kind of wash, through a keyboard on the control panel (71) of the Configurable Electronic Appliance Controller (66). The Configurable Electronic Appliance Controller (66) controls the Wash Motor (72), Waterfill valve (74), Heater (73), Detergent-Dispense valve (75), and the Water Drain valve (76) to automatically operate the Washing Machine in the desired manner.

Fig.-10 shows the application of the Configurable Electronic Appliance Controller (77) in a Refrigerator (78). Temperature Sensors (79), (80), (81) and (82) sense the temperature in the Freezer, Main Compartment, Crisper Unit and Defrost Heater respectively, of the Refrigerator and feed signals corresponding to the sensed values at the inputs of the Configurable Electronic Appliance Controller (77). In addition, sensor (83) functions as an over-heat sensor connected to the housing of the compressor (84) and feeds a signal corresponding to the sensed temperature at another input of the Configurable Electronic Appliance Controller (77). Switch (88) provides door status information and key-switches in the control panel (89) provide user-selection data to other inputs of the Configurable Electronic Appliance Controller (77). The Compressor Run winding (90), Compressor Start winding (91), Blowers (86) and (87) and Heater (85) are driven by the outputs of the Configurable Electronic Appliance Controller (77) which also provides a display in the control panel (89) of the Configurable Electronic Appliance Controller (77) for providing feedback to the user.

### WORKING :

Input Interface Unit (3), as shown in Fig.-4, provides drive signals (36a-36h) for analog sensing devices in the appliance, and receives inputs (1a-1h) from them. These signals are received at the inputs of Analog Multiplexer (37) inside the Input Interface Unit (3), which selectively connects one of these input signals to its output under the control of selection signal (5a) received from the Central Control Unit (6). The selected signal is then fed to the input of Analog-to-Digital Converter (38) which contains special circuitry to adjust for the sensitivity and offset of the sensing device. The sensitivity and offset correction data (M) are received from Non-Volatile Memory (19) under the control of Central Control Unit (6). The digital signal produced at the output of the Analog-to-Digital Converter (38) is applied to one input of Digital Comparator (39) which receives a reference signal (5d) from the Central Control Unit (6) at its other input. The Digital Comparator (39) compares the digital signals at its inputs and feeds the result to one input of a Digital Multiplexer (40). The other inputs of Digital Multiplexer (40) receive digital signals (1i -1n) from digital sensing devices such as switches in the appliance which are scanned by digital output signals (2a-2f) generated by the Digital Demultiplexer (42) in the Input Interface Unit (3). Selection signal (5c) generated by the Central Control Unit (6) controls the Digital Multiplexer (40) to selectively connect one of its input signals to Noise Filter (41) which removes any noise that may be present, before presenting it to the Central Control Unit (6).

Sensor drive circuits (43a-43h), as shown in Fig.-5, similarly provide bias for analog input devices, such as potentiometers, in the User Interface control panel of the Configurable Electronic Appliance Controller. The signals (10a-10h) received from the analog input devices are received by Analog Multiplexer (44) which selectively connects them one-at-a-time, under the control of selection signal (8a) from the Central Control Unit (6), to the input of Analog-to-Digital Converter (45). which contains special circuitry to adjust for the sensitivity and offset of the analog input device, using data (M) supplied by Non-Volatile Memory (19). The digital output from the Analog-to-Digital Converter (45) is applied to one input of Digital Comparator (46) which receives a reference signal (8d) from the Central Control Unit (6) at its other input. The Digital Comparator (46) compares the digital signals at its inputs and feeds the result to one input of a Digital Multiplexer (47). The other inputs of Digital Multiplexer (47) receive digital signals (10I-10n) from digital sensing devices such as switches in the appliance which are scanned by digital output signals (11a-11h) generated by the Digital Demultiplexer (49) based on input signal (7c) and selection signal (8f) from the Central Control Unit (6). The Central Control Unit (6) also supplies data for providing visual or audible feedback to the user, to the input of Latches (51a-51f). The latched data is applied to the input of Display and Audio Driver (50) which converts the data with the help of signals (M) received from the Non-Volatile Memory (19) into signals (11i-11n) suitable for driving the display device and audio output transducer.

Signals (15a ― 15f), as shown in Fig.-6, are received by the Load Interface Unit (12) from the Central Control Unit (6) and latched using Latches (52a-52f). These latched signals are then applied to the input of Switch Control circuits (53a-53f) which drive Switches (54a-54f) to control the external load devices which are actuators (such as motors, blowers, solenoid valves, etc.) in the appliance for controlling its operation. The Switch Control circuits (53a-53f) together with the Current Shunts (55a-55f), continuously monitor the electrical conditions of the Switches (54a-54f) and the Loads (56a-56f) in order to protect them against over-current and over-heat conditions as well as to provide the special feature of "Soft-Start" of the load so as to minimize the electrical stresses imposed at the time of turning it on. The signals (57a-57f) from the Current Shunts (55a-55f) are also received at the inputs of Analog Multiplexer (58) which feeds them one-at-a-time, under control of signal (15o) from the Central Control Unit (6), to a Load Current Sense Circuit (59) which also incorporates special circuitry for correcting for the sensitivity and offset of the sensed signal using data (M) supplied by Non-Volatile Memory (19). The corrected signal from the output of the Load Current Sense Circuit (59) is received by Comparator (60) which receives a reference value (15p) from the Central Control Unit (6) and provides a comparison result (14) to the Central Control Unit (6).

The Supply Interface Unit (16), as shown in Fig.-7, receives the supply voltage (65) at the input of Voltage Sense Circuit (61) which converts it to a digital value (17b) and applies the result to the input of Digital Comparator (62) which receives a reference value (M) corresponding to the low-voltage limit from the Non-Volatile Memory (19) at its other input, and Digital Comparator (63) which receives a reference value (M) corresponding to the high-voltage limit from the Non-Volatile Memory (19) at its other input, the result of the comparisons are fed to the input of Latch (64) to furnish a combined result (17a) to the Central Control Unit (6).

As shown in Fig.-3, the signals (4a-4b) sent by the Input Interface Unit (3), signals (8a-8f) emitted by the User Interface Unit (7), signal (14) presented by the Load Interface Unit (12), and the signal (17) outputted by the Supply Interface Unit are processed by the Configurable Logic Circuit (25), with the help of the Counters and Timers (26) circuit, Memory (28) circuit, and Real-Time-Clock (33) circuit under the control of the Sequence Control circuit (31).

The functions performed by the Configurable Logic Circuit (25) as well as the sequence operated by the Sequence Control circuit (31) are configured by the configuration data (M) supplied by the Non-Volatile Memory (19).

In the application of the Configurable Electronic Controller for Appliances in a Washing machine (67) as shown in Fig.-8, Water Temperature Sensor (70) and the Water Level Sensor (68) are driven by Sensor Drive circuits (36a) and (36b) in the Input Interface Unit (3) and provide analog signals (1a) and (1b) at the inputs of Analog Multiplexer (37). These signals are selectively connected to the input of Analog-to-Digital Converter (38), as shown in Fig.-4, under the control of selection signal (5a) from the Central Control Unit (6). Analog-to-Digital Converter (38) also receives sensitivity and offset correction data (5b) from the Central Control Unit and uses the data for correcting for the sensitivity and offset of the received signal. The digital output from the Analog-to-Digital Converter (38) is compared with a reference value (4a) from the Central Control Unit (6) by the Digital Comparator (39). The result of the comparison is received at one of the inputs of Digital Multiplexer (40) which also receives the digital signal from Cover-Open Sensor (60) at another input. The signals at the inputs of the Digital Multiplexer (40) are selectively brought to its output under control of selection signal (5c) from the Central Control Unit (6) and are filtered by Noise Filter (41) the output (4b) of which is connected to the Configurable Logic Circuit (25). Simultaneously, user input data supplied through a potentiometer knob and keyboard in the Control Panel (71) of the Washing Machine is received as signals (10a) and (10i-10n) at the inputs of the Configurable Electronic Controller for Appliances. The analog signal (10a) from the potentiometer is selectively connected to the input of Analog-to-Digital Converter (44) under the control of selection signal (8a) from the Configurable Logic Circuit (25). Analog-to-Digital Converter (45) also receives sensitivity and offset correction data (8b) from the Configurable Logic Circuit (25) and uses the data for correcting for the sensitivity and offset of the received signal. The digital output from the Analog-to-Digital Converter (45) is compared with a reference value (8d) from the Configurable Logic Circuit (25) by the Digital Comparator (46). The result of the comparison is received at one of the inputs of Digital Multiplexer (47) which also receives the digital signals from the keyboard (10i-10n) at other inputs. The signals at the inputs of the Digital Multiplexer (47) are selectively brought to its output under control of selection signal (8c) from the Configurable Logic Circuit (25) and are filtered by Noise Filter (48) the output (7b) of which is connected to the Configurable Logic Circuit (25). Signals (7c) and (8f) from the Configurable Logic Circuit (25) control Digital Demultiplexer (49) to generate signals (11a-11h) for scanning the keyboard in the Control Panel (71). At the same time, signals (7d-7k) from the Configurable Logic Circuit (25) after latching in Latches (51a-51f) drive the input of Display and Audio Driver circuit (50) which also receives display and audio mode control data from Non-Volatile Memory (M), and drives the external display and audio devices using signals (11a-11n) to provide feedback information such as annunciation of selected 'Wash Mode', to the user. The signals received by the Configurable Logic Circuit (25) are processed , using configuration data (M) from the Non-Volatile Memory (19), under the control of timing sequence control signal (32) received from the Sequence Control circuit (31), and parametric data (30) received from Memory (28) with the help of Counters and Timers (26) and Real Time Clock (33). The result of the processing generates control signal (15a-15f) which control the operation of the Load Control Unit (12). The signals (15a-15f) are latched in Latches (52a-52e) and drive switches (53a-53e) which operate the Detergent Dispense Valve (75), Heater (73), Water Fill Valve (74), Wash Motor (72), and Water Drain Valve (76), in the desired manner.

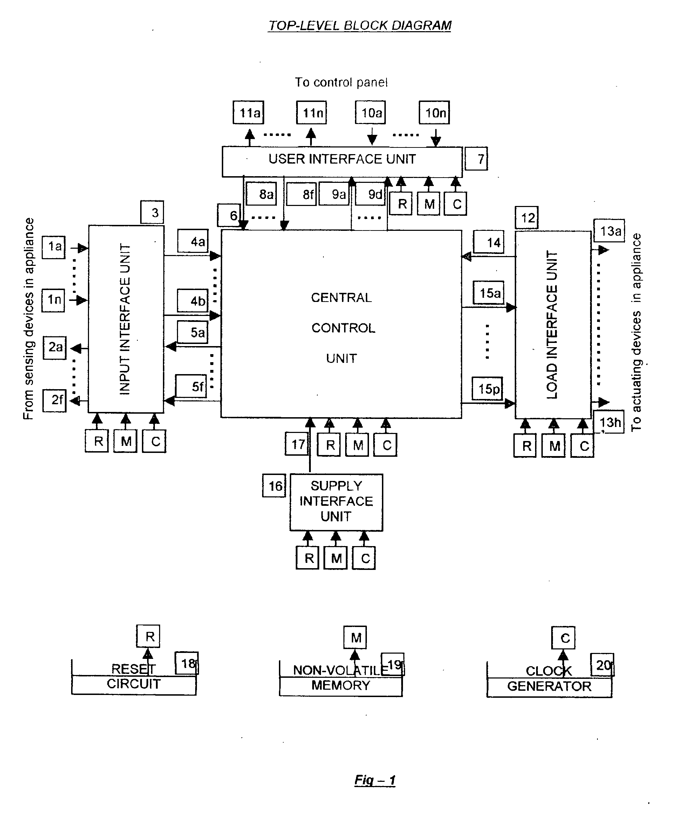

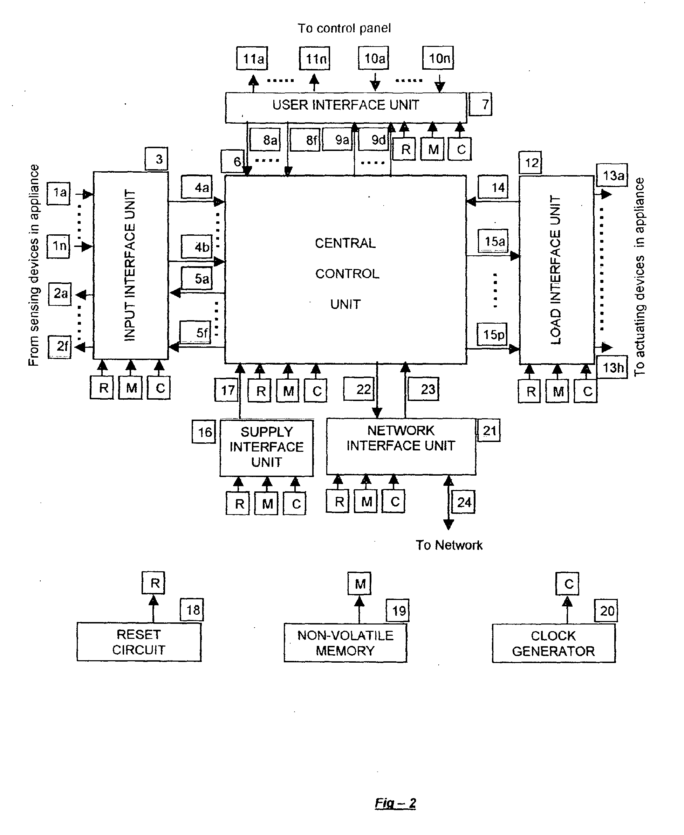

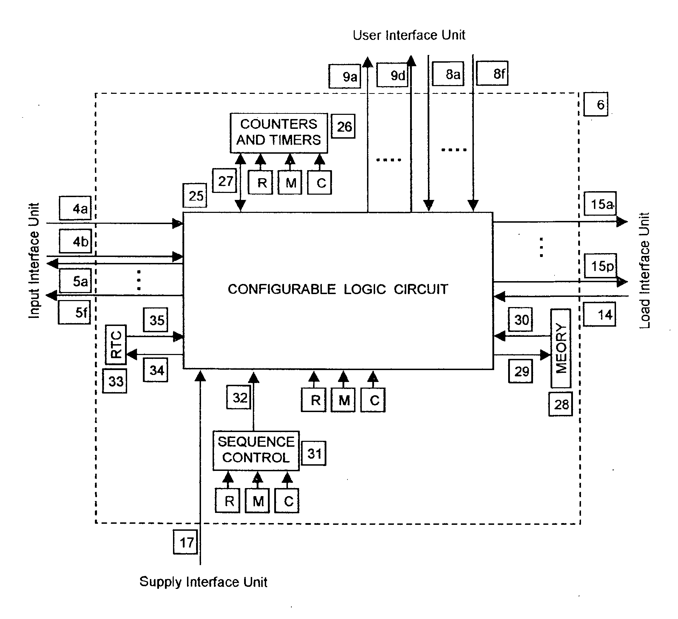

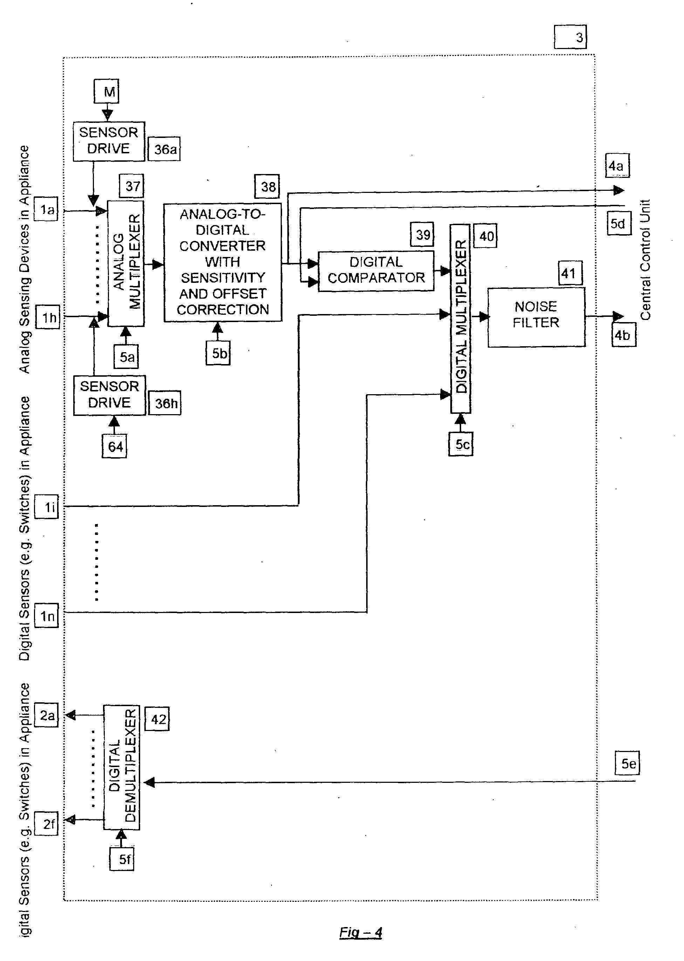

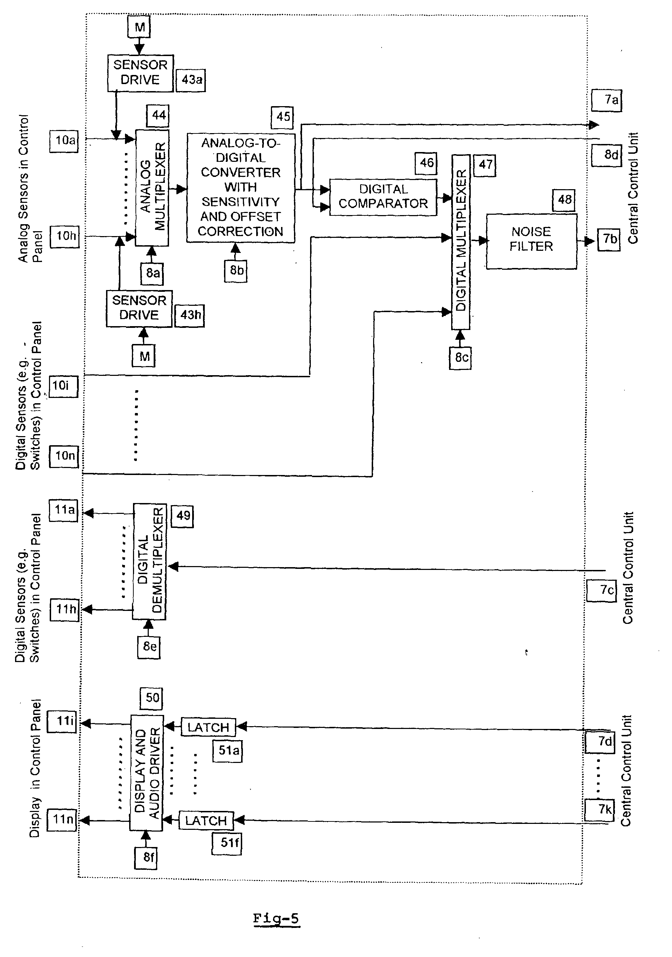

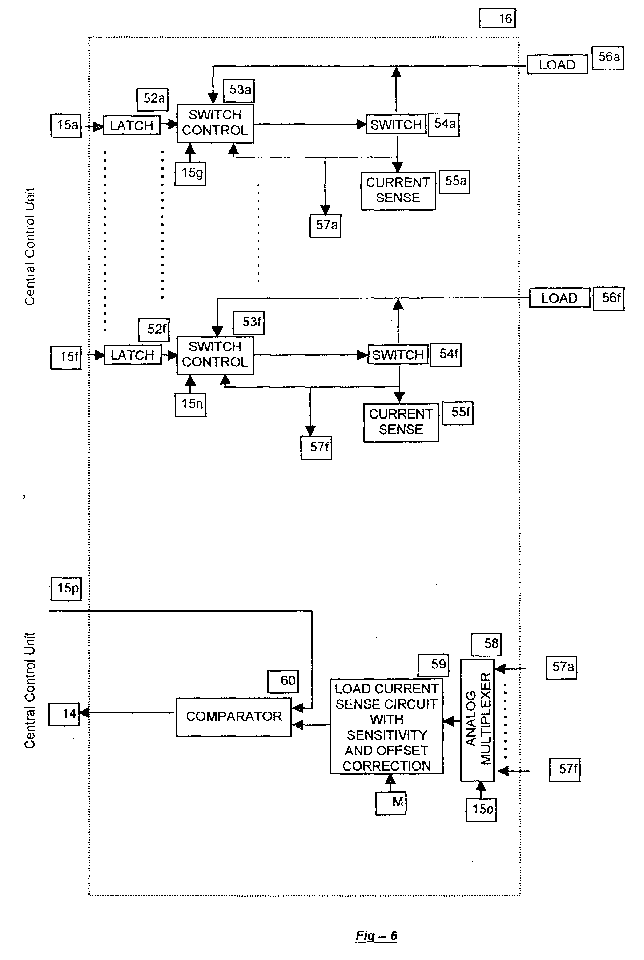

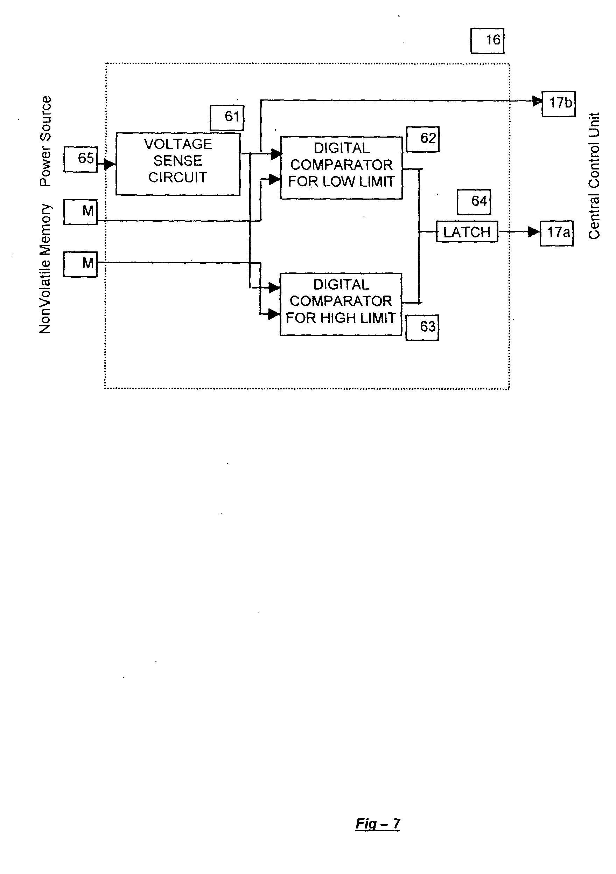

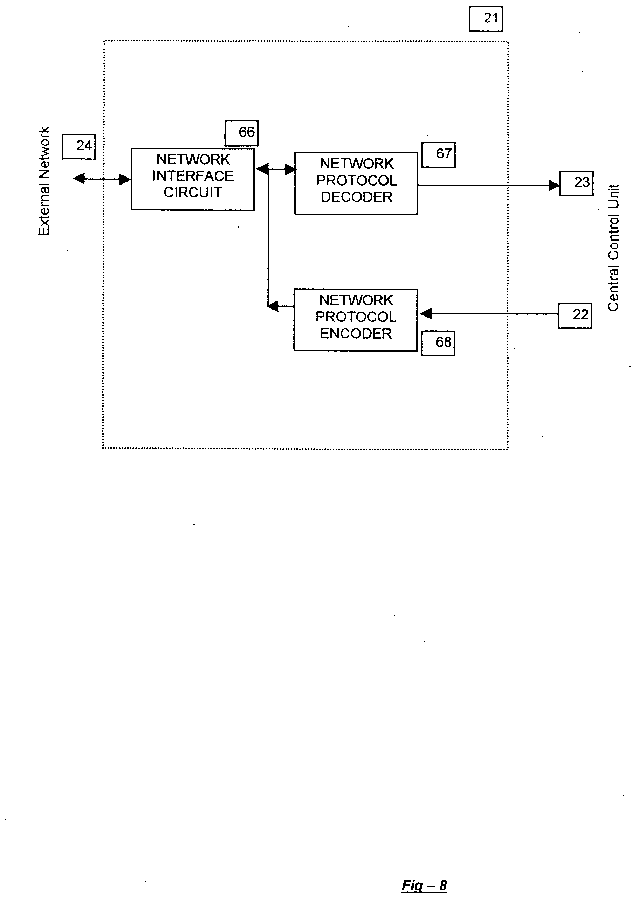

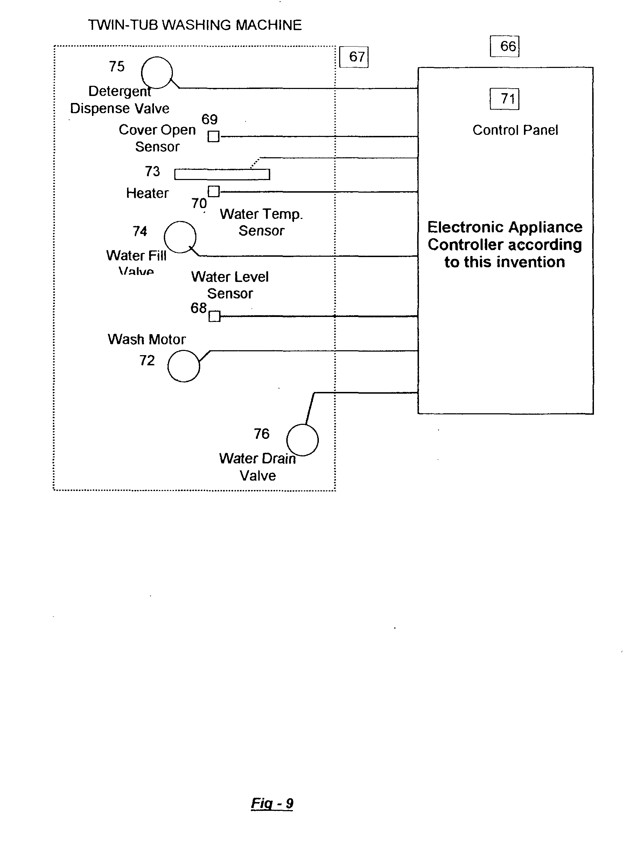

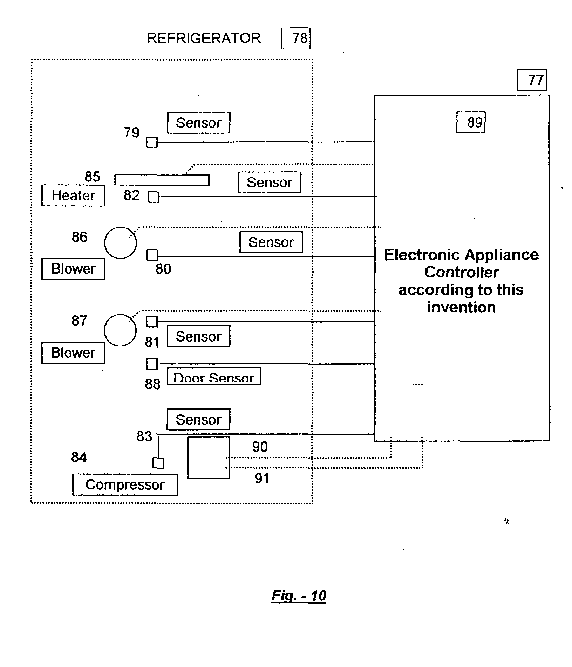

## Claims

1. A configurable electronic controller for appliances comprising:
- a Non-Volatile Memory containing (M)configuration data,
- a configurable Central Control Unit (6) which performs the basic processing and control of the functioning of the appliance, and is configured for the required functionality by the configuration data supplied by the said Non-Volatile Memory(M),
- one set of inputs of the said Central Control Unit are connected to the outputs of an Input Interface Unit (3) which receives the signals from various sensing elements in the appliance and conditions these signals for further processing by the said Central Control Unit (6),
- one set of outputs of the said Central Control Unit (6) are fed back to the said Input Interface Unit (3) for controlling its internal operation,
- a second set of inputs of the said Central Control Unit (6) receive user input data from the outputs of a User Interface Unit (7),
- a second set of outputs of the said Central Control Unit(6) are fed back to the said User Interface Unit (7) as signals for outputting data to the user by visual and audible means, as well as for controlling its internal operation,
- a third input of the said Central Control Unit (6) is connected to one output of a Load Interface Unit to provide data on load conditions,
- a third set of outputs from the said Central Control Unit (6) are connected to the inputs of the said Load Interface Unit (12) which drives the actuating means in the appliance for controlling its operation,
- a fourth input of the said Central Control Unit (6) receives power supply condition signals from a Supply Interface Unit (16),
- the said Non-Volatile Memory Unit (M) provides non-volatile storage of data and is connected to main circuit blocks consisting of the said Central Control Unit (6), Input Interface Unit (3), User Interface Unit (7), Load Interface Unit (12), and Supply Interface Unit (16),
- the output of a Clock Generator (C )circuit is connected to one input of each of the said main circuit blocks and produces a clock signal required for their operation,
- the output of a Reset (R )circuit is connected to one input of each of the said main circuit blocks and produces a reset signal required for their proper initialization,
- The arrangement between the components of the main circuit blocks is such that the said Central Control Unit (6) receives sensed parameter data supplied by the various sensing devices in the appliance, from the said Input Interface Unit (3), user requirement data from the said User Interface Unit(7) , load conditions data from the said Load Interface Unit (12), and the supply conditions data from the said Supply Interface Unit (16), and processes all this data in accordance with its configured functionality, and then applies signals to the inputs of the said Load Interface Unit (12) for operating the actuating devices in the appliance for controlling its operation, and to the inputs of the said User Interface Unit (7) for providing feedback to the user.

2. A Configurable Electronic Controller as claimed in claim 1, wherein the said Central Control Unit (6) consists of:
- a Configurable Logic Circuit (25) for implementing the basic control algorithms that determine the functioning of the appliance, which is configured for the required functionality by the configuration data supplied by the said Non-Volatile Memory (M)
- one set of inputs of the said Configurable Logic Circuit (25) are connected to the outputs of the said Input Interface Unit (3) for receiving the signals from various sensing elements in the appliance,
- one set of outputs of the said Configurable Logic Circuit (25) is connected to the input of the said Input Interface Unit (3) for controlling its internal operation,
- a second set of inputs of the said Configurable Logic Circuit (25) is connected to one output of the said User Interface Unit(7) for receiving user supplied data,
- a second set of outputs of the said Configurable Logic Circuit (25) is connected to the input of the said User Interface Unit(7) for supplying feedback to the user as well as for controlling the internal operation of the said User Interface Unit (7),
- a third input of the said Configurable Logic Circuit (25) is connected to one output of the said Load Interface Unit (12) for receiving data about the load conditions,
- a third set of outputs of the said Configurable Logic Circuit (25)is connected to one input of the said Load Interface Unit (12) for controlling the load as well as for controlling the internal operation of the said Load Interface Unit (12),
- a fourth input of the said Configurable Logic Circuit (25)is connected to one output of the said Supply Interface (16) for receiving data on the supply conditions,
- a fifth input of the said Configurable Logic Circuit (25) is connected to a Counters and timers block (26) which contains an array of counters and timers required for the operation of the appliance,
- a sixth input of the said Configurable Logic Circuit (25) is connected to a memory circuit for reading of data stored therein,
- a fifth output of the said Configurable Logic Circuit (25) is connected to the said memory circuit for writing data into it,
- a seventh input of the said Configurable Logic Circuit (25) is connected to the output of a Sequence Control circuit (31) which provides the control signals required for defining the sequence of operations performed by the said Configurable Logic Circuit (25),
- an eighth input of the said Configurable Logic Circuit (25) is connected to a Real-Time-Clock (RTC) circuit which provides time-of-day information required for the functioning of the Configurable Logic Circuit (25),
- a sixth output of the said Configurable Logic Circuit (25) is connected to the input of the said RTC circuit for setting its value when required.
- the arrangement between the said Configurable Logic Circuit (25), Sequence Control circuit (31), Counters and Timers block (26), Memory block(28), and RTC circuit is such that the sensor data received from the said Input Interface Unit (3), user requirement data received from the said User Interface Unit(7) , load conditions data supplied by the said Load Interface Unit(12), and supply conditions data furnished by the said Supply Interface Unit(16), are processed by the said Configurable Logic Circuit (25) under the control of signals from the said Sequence Control circuit (31), using data supplied by the said Memory block(28), said Counters and Timers block (26) and said RTC circuit, to generate the outputs required to control the loads through the said Load Interface Unit(12) provide feedback data required for the user through the said User Interface Unit (7), as well as supply signals required to update the data stored in the said Memory block (28), said Counters and Timers block(26)and said RTC circuit, for use in subsequent processing.

3. A Configurable Electronic Controller as claimed in claim 1, wherein the said Input Interface Unit (7) consists of:
- Sensor Drive circuits (36 a to 36h) for providing bias signals to external sensing devices connected to the Electronic Appliance Controller,
- the output of each of the said Sensor Drive circuit is connected to the input of one channel of an Analog Multiplexer (37),
- the output of the said Analog Multiplexer (37) is connected to the input of an Analog-to-Digital Converter (38),
- the said Analog-to-Digital Converter (38) contains in-built circuitry for the correction for the sensitivity and offset of the signal from each sensing device,
- the output of the said Analog-to-Digital converter (38) is connected to one input of a Digital Comparator (39),
- the other input of the said Digital Comparator (39) is connected to the said Central Control Unit for receiving a reference signal,
- the output of the said Digital Comparator (39)is connected to one input of a Digital Multiplexer(40),
- the other inputs of the said Digital Multiplexer (40) receive digital signals from various sensing devices in the appliance,
- the output of the said Digital Multiplexer (40) is connected to the input of a Noise Filter(41),
- the output of the said Noise Filter (41) is connected to an input of the said Central Control Unit (6) for furnishing data on the signals received from the various sensing devices,
- a Digital Demultiplexer (42) receives input signals from the said Central Control unit (6)and produces multiple digital output signals for scanning the status of various digital sensing devices in the appliance,
- the arrangement between the said Analog Multiplexer (37), said Analog-to-Digital Converter (38), said Digital Comparator (39), said Digital Multiplexer (40), and said Noise Filter (41) is such that the sensor data received from analog sensors is selected by the said Analog Multiplexer Circuit (38) under the control of signals from the said Central Control Unit (6), converted to digital form by the said Analog-to-Digital converter (38) and applied to the inputs of the said Digital Multiplexer (40) which also receives other digital signals directly from digital sensing devices in the appliance which are scanned by signals supplied by the said Digital Demultiplexer(40) using signals supplied by the said Central Control Unit (6), and then applies these one-at-a-time under control of signals from the said Central Control Unit (6), to the input of the said Noise Filter (41) for filtering and supplying to the said Central Control Unit (6) for processing.

4. A Configurable Electronic Controller as claimed in claim 1, wherein the said User Interface Unit consists of
- Sensor Drive circuits (43a to 43h) for providing bias signals to various analog components, such as potentiometers, used for obtaining user selection values,
- the output of each of the said Sensor Drive circuits is connected to the input of one channel of an Analog Multiplexer (44),
- the output of the said Analog Multiplexer (44)is connected to the input of an Analog-to-Digital Converter (45),
- the said Analog-to-Digital Converter (45) contains circuitry for providing in-built correction for the sensitivity and offset of the signal from each sensing device,
- the output of the said Analog-to-Digital converter (45) is connected to one input of a Digital Comparator (46),
- the other input of the said Digital Comparator (46) is a reference signal received by the User Interface Unit (7) from the Central Control Unit,
- the output of the said Digital Comparator (46) is connected to one input of a Digital Multiplexer (47),
- the other inputs of the said Digital Multiplexer (47) receive digital signals from various front-panel switches provided for receiving user input,
- the output of the said Digital Multiplexer (47) is connected to the input of a Noise Filter(48),
- the output of the said Noise Filter (48) is connected to an input of the said Central Control Unit (6),
- a Digital Demultiplexer (49) receives input signals from the said Central Control unit (6) and produces multiple digital output signals for scanning the status of the various digital inputs, such as switches, for obtaining user input,
- a second set of signals from the said Central Control Unit are connected to a set of Latches (51a to 51f),
- the output of each of the said Latches (51a to 51f) is connected to the input of a Display and Audio Driver circuit (50) which contains the circuitry for driving the display device and audio output device for providing output data to the user,
- the arrangement between the said Analog Multiplexer (44), said Analog-to-Digital Converter (45), said Digital Comparator (46), said Digital Multiplexer(47), said Noise Filter (48), said Digital Demultiplexer(47), and said Display and Audio Driver circuits(50) is such that the sensor data received from the analog sensors in the User Interface(7) is selected by the said Analog Multiplexer Circuit (44) under the control of signals from the said Central Control Unit (6), converted to digital form by the said Analog-to-Digital converter (45)and applied to the inputs of the said Digital Multiplexer(47) which also receives other digital signals received directly from digital sensing devices in the User Interface (7) which are scanned by signals supplied by the said Digital Demultiplexer(49) using signals from the Central Control Unit, and selectively applies them to the said Noise Filter(48) under control of the said Central Control Unit, for filtering and supplying to the said Central Control Unit for processing, while simultaneously the said Display and Audio Driver (50)circuit drives the external display and audio output devices in accordance with the data supplied by the said Central Control Unit.

5. A Configurable Electronic Controller as claimed in claim 1, wherein the said Load Interface Unit (12) consists of:
- a plurality of Latches (52 a to 52 f) for storing the data received from the said Central Control Unit,
- the output of each of the said Latches is connected to the input of a Switch Control circuit (53a to 53f),
- the output of each of the said Switch Control circuits drives a Switch (54a to 54f) that operates a Load (56a to 56 f) which is an actuating device in the appliance used to control its operation,
- one end of each of the said Switches is connected to the Load while the other end of the Switch is connected to a Current Sensor (55a to 55f) for sensing the current through the load,
- the output from each of the said Current Sensors is connected to one input of an Analog Multiplexer (58),
- the output of the said Analog Multiplexer (58) is connected to the input of a Load Sense Circuit (59) which incorporates in-built correction for the sensitivity and offset of the signal from each Shunt,
- the output of the said Load Sense Circuit is connected to one input of a Digital Comparator (60),
- the other input of the said Digital Comparator (60) is a reference signal received by the said Load Interface Unit from the Central Control Unit (6),
- the output of the said Digital Comparator (60) is connected to an input of the said Central Control Unit,
- the arrangement between the said Latches (52a to 52f), said Switch Drive Circuits (53a to 53f), said Switches(54a to 54f), said Current Sensors(55a to 55f), said Analog Multiplexer, said Load Current Sensing Circuit (59), said Digital Comparator (60) and said output Latch, is such that the load current data received by the said Load Current Sensors is converted to digital form by the said Load Current Sense Circuit (59), compared with reference data supplied from the said Central Control Unit (6) by the said Digital Comparator and supplied to the said Central Control Unit which furnishes signals for controlling the operation of the said Switch Control Circuits (53a to 53f) through the said Latches (52a to 52f).

6. A Configurable Electronic Controller as claimed in claim 1, wherein the said Supply Interface Unit (16) consists of:
- a Supply Voltage Sense circuit (61) which senses the voltage level of the input supply voltage,
- the output of the said Supply Voltage Sense circuit (61) is connected to one input of each of two digital comparators(62 and 63),
- the second input of each of the said Digital Comparators is connected to a signal received from the said Central Control Unit (6),
- the outputs of the said Digital Comparators (62 and 63) are connected to the input of a Latch (64),
- the output of the said Latch (64) is connected to an input of the said Central Control Unit (6),
- the arrangement between the said Supply Voltage Sense circuit (61), said Digital Comparators (62 and 63), and said Latch is such that the sensed supply voltage is converted to digital form by the said Supply Voltage Sense circuit and compared by the said Digital Comparators with reference data supplied by the said Non-Volatile Memory, and the results of the comparison are latched by the said Latch and furnished to the said Central Control Unit as supply condition data.

7. A Configurable Electronic Controller as claimed in claim 1, wherein it further includes a Network Interface Unit (21) that is connected to another output from the said Central Control Unit (6) and provides an input to the said Central Control Unit for exchanging data between an external network and the said Central Control Unit.

8. A Configurable Electronic Controller as claimed in claim 1, wherein the said Configurable Logic Unit (25) in one implementation is a Gate Array that is configured by the configuration data supplied by the said Non-Volatile Memory (M).

9. A Configurable Electronic Controller as claimed in claim 1, wherein the said Configurable Logic Unit (25)in another implementation is an embedded microprogrammed controller that is configured by the configuration data supplied by the said Non-Volatile Memory (M).

10. A Configurable Electronic Controller as claimed in claim 1, wherein the said Configurable Logic Unit (25) in another implementation is configurable for providing overcurrent protection and "Soft Start" facility that supplies a reduced voltage start to the load in order to minimize in-rush current stress at turn-on, selectively to the loads through the signals applied to the inputs of the said Load Interface Unit (12).

11. A Configurable Electronic Controller as claimed in claim 1, wherein the said Configurable Logic Unit (25)in another implementation is configurable for providing overheat protection selectively to the loads using temperature data supplied by sensing devices physically attached to the selected loads through the signals supplied by the said Input Interface Unit (3), and supplying applying signals to the inputs of the said Load Interface Unit (12) to turn-off the drive to the loads in case of overheat conditions.

12. A Configurable Electronic Controller as claimed in claim 1, wherein the said Clock Generator (C )is an oscillator with a frequency preferably in the range 32 KHz to 25 MHz.
